# EUROPÄISCHE PATENTSCHRIFT

(11) **EP 3 617 685 B1**
(45) Veröffentlichungstag und Bekanntmachung des Hinweises auf die Patenterteilung: **27.07.2022**
(21) Anmeldenummer: 19168774.8
(22) Anmeldetag: 11.04.2019
(51) Int. Cl.: G01L 5/00, G01L 25/00

(54) **LASTVORRICHTUNG, TRAGRAHMEN FÜR EINE LASTVORRICHTUNG UND PRÜFSYSTEM**
LOAD DEVICE, FRAME FOR A LOAD DEVICE AND TEST SYSTEM
DISPOSITIF DE CHARGE, CADRE PORTEUR POUR UN DISPOSITIF DE CHARGE ET SYSTÈME DE CONTRÔLE

(30) Priorität: 30.08.2018 DE 102018214696
(43) Veröffentlichungstag der Anmeldung: 04.03.2020
(73) Patentinhaber: MAHA Maschinenbau Haldenwang GmbH & Co. KG, 87490 Haldenwang (DE)
(72) Erfinder: Hafenmaier, Markus, 87600 Kaufbeuren (DE); Herb, Stefan, 87487 Wiggensbach (DE); Schade, Sebastian, 86956 Schongau (DE); Crispien, Steffen, 87439 Kempten (DE); Hildermann, Konstantin, 87437 Kempten (DE)
(74) Vertreter: MERH-IP Matias Erny Reichl Hoffmann Patentanwälte PartG mbB

(56) Entgegenhaltungen:
- CN-A- 107 255 544
- DE-A1-102009 035 410
- JP-A- 2001 228 041
- US-A1- 2015 096 348

## Beschreibung

Die vorliegende Beschreibung betrifft insbesondere ein Prüfsystem mit einer Lastvorrichtung und einem Tragrahmen für die Lastvorrichtung. Die Lastvorrichtung ist kompakt und handlich und ermöglicht eine genaue Prüfkrafterzeugung. Ferner können die Lastvorrichtung und der Tragrahmen mit wenig Aufwand und -zeiteffizient zu einem (Teil eines) Prüfsystems zusammengefügt werden, das insgesamt handlich und kompakt und flexibel an verschiedene Prüfstände für Kraftfahrzeuge anpassbar ist.

Im Stand der Technik sind Kraft- bzw. Drehmomentmesseinrichtungen, insbesondere Kraftfahrzeugprüfstände, wie beispielsweise Brems- oder Leistungsprüfstände, bekannt, die Rollen aufweisen, auf denen ein Kraftfahrzeugrad aufgestellt wird. Die Rollen können beispielsweise mittels eines Motors antreibbar sein und die Prüfstände können eine Kraft und/oder ein Drehmoment messen, dass z.B. auf die Rollen einwirkt. Dadurch können z.B. die Bremsen eines Kraftfahrzeuges geprüft werden. Bislang werden für die Prüfung bzw. Justierung/Kalibrierung dieser Kraftfahrzeugprüfstände Masse-Hebelsysteme eingesetzt, mit denen die Messgenauigkeit des Prüfstandes geprüft wird. Diese vorbekannten Masse-Hebelsysteme sollen im Hinblick insbesondere auf Kompaktheit, Aufbau- und Einrichtungsaufwand und Messgenauigkeit verbessert werden.

Die US 2015/096348 A1 beschreibt eine Krafteinbringanordnung, um einen Insitu-Kraftwandler in einer Kraft-Testmaschine zu kalibrieren.

Die CN 107 255 544 A beschreibt eine Lastsensor-Kalibrierungsvorrichtung, die einen Träger, einen Standard-Lastsensor, ein Hydrauliksystem und eine Steuerung umfasst; der Träger umfasst eine Bodenplatte und eine Deckplatte, die Bodenplatte und die Deckplatte sind in einem Intervall befestigt,

die Deckplatte ist mit einem ersten Verbindungselement versehen, das mit einem zu kalibrierenden Lastsensor verbunden ist.

Die DE 10 2209 035 410 A1 beschreibt einen Prüfstand, der ein um eine Hauptachse pendelnd gelagertes Dynamometer aufweist, von dem aus sich ein Hebelarm senkrecht erstreckt. Zum Kalibrieren einer mit dem Hebelarm gekoppelten Kraft-Messeinrichtung ist ein Pneumatikzylinder als Referenzkraft-Erzeugungseinrichtung vorgesehen.

Die JP 2001 228041 A beschreibt ein Kalibriergerät für Lastzellen.

Es ist die technische Aufgabe, ein Prüfsystem zum Prüfen, Kalibrieren und/oder Justieren einer Kraft- bzw. Drehmomentmesseinrichtung und die Teilbauteile des Prüfsystems im Hinblick auf größtmögliche Kompaktheit und Transportfähigkeit bei hoher Messgenauigkeit und auf einen wenig komplexen, mit wenig Aufwand durchführbaren Aufbau zu verbessern.

Die Aufgabe wird von dem unabhängigen Patentanspruch 1 gelöst. Weitere bevorzugte Weiterentwicklungen sind in den abhängigen Patentansprüchen beschrieben.

Beschrieben werden hier insbesondere eine Lastvorrichtung, ein Tragrahmen für die Lastvorrichtung und ein Prüfsystem.

Es ist vorgesehen eine Lastvorrichtung zum Einbringen einer Kraft, insbesondere einer Prüf- oder Referenzkraft, in ein Prüfsystem zum Prüfen, Kalibrieren und/oder Justieren von Kraft- bzw. Drehmomentmesseinrichtungen, insbesondere Kraftfahrzeugprüfständen. Das Prüfen soll insbesondere umfassen, dass ein Messwert der zu prüfenden Kraft- bzw. Drehmomentmesseinrichtung mit einem Referenzkraftwert abgeglichen wird. Ein Justieren oder Kalibrieren kann ferner umfassen, dass die Messgenauigkeit der Messwerterfassung der zu prüfenden Kraft- bzw. Drehmomentmesseinrichtung insbesondere basierend auf den Prüfergebnissen eingestellt oder verbessert wird.

Die Lastvorrichtung kann ein Gehäuse und eine Kraftübertragungseinrichtung aufweisen. Das Gehäuse hält die Kraftübertragungseinrichtung bevorzugt und besonders bevorzugt ist die Kraftübertragungseinrichtung zumindest teilweise und ganz besonders bevorzugt zum größten Teil innerhalb des Gehäuses angeordnet. Das Gehäuse ist bevorzugt rohrförmig oder zumindest ein im Wesentlichen längliches Hohlbauteil; wobei länglich bedeuten soll, dass die Länge größer ist als ein Abmaß des Querschnittes, z.B. der Durchmesser oder die Seitenkantenlänge. Besonders bevorzugt hat das Gehäuse ferner zwei Öffnungen, jeweils gegenüberliegend zueinander angeordnet.

Die Kraftübertragungseinrichtung kann zumindest ein Kraftübertragungsmittel umfassen, das in dem Gehäuse bewegbar gelagert ist. Das Kraftübertragungsmittel ist bevorzugt kolben- oder stabförmig und besonders bevorzugt ist es ein Kolben, eine Spindel oder dgl. Ferner ist das Kraftübertragungsmittel bevorzugt verschiebbar innerhalb des Gehäuses gelagert und besonders bevorzugt entlang einer Längsachse des Gehäuses angeordnet.

Ferner kann das Kraftübertragungsmittel zumindest zwei Endabschnitte aufweisen: ein Endabschnitt kann zum Empfangen einer zu übertragenden Eingangskraft eingerichtet sein und ein weiterer Endabschnitt kann zum Ausgeben einer Ausgangskraft zum Prüfen der Kraft- bzw. Drehmomentmesseinrichtung eingerichtet sein. Sollten mehr als ein Kraftübertragungsmittel vorgesehen sein, so können die vorbeschriebenen Endabschnitte auch an unterschiedlichen Kraftübertragungsmitteln vorgesehen sein bzw. über die verteilt sein. Beispielsweise können dann der Endabschnitt zum Empfangen einer zu übertragenden Eingangskraft an einem ersten Kraftübertragungsmittel und der Endabschnitt zum Ausgeben einer Ausgangskraft an einem zweiten Kraftübertragungsmittel vorgesehen sein.

Der wenig komplexe Aufbau der Lastvorrichtung ist besonders kompakt und erlaubt es definierte Ausgangskräfte als Prüfreferenzkraft in das zu prüfende System einzugeben bzw. zu übertragen, d.h. die Lastvorrichtung ist bevorzugt Teil des Prüfsystems und dazu eingerichtet, die zu prüfende Kraft- bzw. Drehmomentmesseinrichtung mit einer genau bestimmbaren und einstellbaren Referenzkraft als Prüfkraft zu beaufschlagen. Die Montage bzw. Verbindung mit einem Tragrahmen ist wegen des kompakten und wenig komplexen Aufbaus auch zeiteffizient und einfach durchführtbar. Es kann auf die bisher eingesetzten Masse-Hebelsysteme verzichtet werden.

Ferner kann zumindest ein Teil(-bereich) des Endabschnittes zum Ausgeben der Ausgangskraft aus dem Gehäuse herausragen. Bevorzugt ragt der Endabschnitt an einer Öffnung des Gehäuses heraus, die einer Öffnung des Gehäuses gegenüberliegt, an der eine Eingangskraft eingeleitet wird.

Die Länge des herausragenden Teils des Endabschnittes kann veränderbar eingerichtet sein. Das Verändern dieser Länge kann bevorzugt dadurch erfolgen, dass auf den Endabschnitt zum Empfangen einer zu übertragenden Eingangskraft eine Kraft ausgeübt wird.

Die Kraft bzw. die Veränderung der Kraft, die eingegeben wird, d.h. die Eingangskraft, kann bewirken, dass der herausragende Teil des Endabschnittes weiter aus dem Gehäuse herausgeschoben bzw. herausbewegt wird. Die Kraft kann beispielsweise dadurch verändert werden bzw. als Eingangskraft aufgebracht werden, indem der Endabschnitt zum Empfangen der Eingangskraft in seiner Position relativ zum Gehäuse verändert wird. Dies kann beispielsweise dadurch realisiert werden, dass der Endabschnitt zum Empfangen der Eingangskraft weiter in das Gehäuse hingeschoben, hineingedrückt, hineingedreht oder dgl. wird.

Der Zusammenhang zwischen Eingangskraft bzw. Positionsveränderung des Endabschnittes zum Empfangen der Eingangskraft und der Länge des herausragenden Teils des Endabschnittes des Kraftübertragungsmittels kann sehr genau vordefiniert werden, so dass eine hohe Genauigkeit der Referenzkrafterzeugung ermöglicht wird, die zudem ohne komplexe bauliche Vorkehrungen realisiert wird.

Ferner kann die Kraftübertragungseinrichtung zumindest zwei Kraftübertragungsmittel und ein Kraftübersetzungsmittel umfassen, wobei das Kraftübertragungsmittel dazu eingerichtet sein kann, die Eingangskraft in einem vorbestimmten oder in einem einstellbaren Verhältnis zu der Ausgangskraft zu verändern. Wie oben bereits als bevorzugte Möglichkeit beschrieben wurde, können auch mehr als ein Kraftübertragungsmittel vorgesehen sein, so dass die Endabschnitte, an denen Kräfte an die/von der Lastvorrichtung ein- und ausgegeben werden, auf unterschiedliche Kraftübertragungsmittel verteilt sein können. Eine bevorzugte Möglichkeit besteht beispielsweise darin, dass das Kraftübertragungsmittel zwischen zwei Kraftübertragungsmitteln angeordnet ist, so dass eine Eingangskraft, die ein erstes Kraftübertragungsmittel empfängt, in einem durch das Kraftübertragungsmittel bestimmten Verhältnis übersetzt wird und somit das zweite Kraftübertragungsmittel die übersetzte Kraft ausgibt.

Ferner kann alternativ oder zusätzlich das Kraftübersetzungsmittel einen Kraftweg verändern. So kann beispielsweise eine Positionsveränderung des ersten Kraftübertragungsmittels so von dem Kraftübersetzungsmittel verändert werden, dass die Positionsveränderung des zweiten Kraftübersetzungsmittels kleiner ist als die des ersten Kraftübersetzungsmittels.

Das Kraftübersetzungsmittel "übersetzt" bevorzugt eine Eingangskraft in eine vergrößerte Ausgangskraft bzw. verkleinert bevorzugt eine Positionsveränderung eines Kraftübertragungsmittels von einer größeren Eingangspositionsveränderung (Hubweg) zu einer kleineren Ausgangspositionsveränderung (Hubweg).

Das Kraftübertragungsmittel kann einteilig oder mehrteilig sein. Bevorzugt ist es hydraulisch, mechanisch und/oder elektrisch ausgeführt. Beispielsweise kann eine Hydraulikkammer zwischen zwei Kraftübertragungsmitteln als Teil eines hydraulischen Kraftübertragungsmittels vorgesehen sein oder ein Getriebe als Teil eines mechanischen Kraftübertragungsmittels.

Die Veränderung des Hubweges zwischen Eingang und Ausgang des Gehäuses bzw. die Veränderung der Eingangs- und der Ausgangskraft mittels eines Kraftübersetzungsmittels erlaubt es, dass die Lastvorrichtung bei kompakter Bauform die notwendigen Prüfkräfte erzeugen kann und zudem die Bedienung mit einfachen Mitteln möglich ist, da auch eine relativ geringe Krafteinbringung, z.B. manuell, die notwendigen Prüfkräfte erzeugen kann.

Ferner kann das Gehäuse einen Verbindungsabschnitt aufweisen, der dazu eingerichtet sein kann, die Lastvorrichtung mit einem Tragrahmen zu verbinden. Der Tragrahmen ist bevorzugt dazu eingerichtet, auf der zu prüfenden Kraft- bzw. Drehmomentmesseinrichtung aufgestellt zu werden. Der Verbindungsabschnitt ist bevorzugt an der Gehäuseaußenseite vorgesehen. Besonders bevorzugt ist der Verbindungsabschnitt Teil des Gehäuses bzw. eines Gehäusebauteils. Beispielsweise kann der Verbindungsabschnitt vorstehende Klemm- oder Eingriffabschnitte und/oder Bohrlöcher bzw. Gewindebohrungen umfassen.

Besonders bevorzugt kann der Verbindungsabschnitt so ausgeformt bzw. eingerichtet sein, dass die Lastvorrichtung mittels Steck- und/oder Schraubvorgänge mit dem Tragrahmen lösbar verbunden werden kann, so dass der Aufbau bzw. die Montage der Lastvorrichtung mit dem Tragrahmen schnell und mit möglichst wenig oder gar keinem Werkzeug ausgeführt werden kann.

Ferner kann der Endabschnitt eines Kraftübertragungsmittels, der zum Empfangen der zu übertragenden Eingangskraft eingerichtet ist, einen Anschlussabschnitt aufweisen. Der Anschlussabschnitt kann einteilig mit dem Kraftübertragungsmittel ausgeführt sein oder ein zusätzliches Bauteil umfassen, das mit dem Kraftübertragungsmittel verbunden ist. Beispielsweise und bevorzugt ist der Anschlussabschnitt der Kopf einer Mehrkantschraube, die mit dem Kraftübertragungsmittel verbunden ist. Das Krafteinbringungsmittel, das besonders bevorzugt nicht ein Teil der Lastvorrichtung ist, kann beispielsweise ein Maulschlüssel sein oder ein elektrischer Schraubenzieher, wenn manuell eine Kraft aufgebracht werden soll. Ferner kann das Kraftübertragungsmittel auch Teil einer Steuerungsanlage sein oder damit verbunden sein, bspw. kann ein Schrittmotor vorgesehen sein, der den Anschlussabschnitt betätigt bzw. das Kraftübertragungsmittel in seiner Position relativ zum Gehäuse bewegt bzw. eine Kraft darauf einleitet. Der Schrittmotor kann beispielsweise per Funk oder kabelgebunden mit einer Regelung verbunden sein, die einzustellende Werte vorprogrammiert oder ferngesteuert anweist.

Es kann folglich ein weniger aufwendiger Prüfbetrieb von einer einzelnen Person und mit gut verfügbaren Werkzeug, falls überhaupt notwendig, durchgeführt werden.

Ferner kann die Kraftübertragungseinrichtung zumindest zwei Kraftübertragungsmittel umfassen, die entlang der Längsachse des Gehäuses angeordnet sein können, wobei zumindest ein Kraftübersetzungsmittel zwischen den zumindest zwei Kraftübertragungsmitteln entlang der Längsachse des Gehäuses angeordnet ist, und eine Rückstellfeder kann ferner innerhalb des Gehäuses angeordnet ist. Die Rückstellfeder kann dazu eingerichtet sein, zumindest den Endabschnitt zum Übertragen der Ausgangskraft eines Kraftübertragungsmittels gegen eine Wirkrichtung der Eingangskraft in Richtung der Längsachse mit einer Rückstellkraft zu beaufschlagen. Dadurch wird die Rückstellung des Kraftübertragungsmittels jederzeit korrekt und ohne zusätzlichen Einstellaufwand gewährleistet und die Bedienung der Lastvorrichtung weiter vereinfacht.

Ferner kann die Kraftübertragungseinrichtung ein erstes Kraftübertragungsmittel mit kleinerem Durchmesser als ein zweites Kraftübertragungsmittel umfassen, wobei ein Kraftübersetzungsmittel zwischen dem ersten und dem zweiten Kraftübersetzungsmittel angeordnet sein kann und eine Spindel Teil der Kraftübertragungsvorrichtung sein kann. Die Spindel kann bevorzugt mit dem ersten Kraftübertragungsmittel verbunden sein, z.B. mittels einer Gewindeschraubverbindung. Wenn bevorzugt ein Anschlussabschnitt zum Verbinden mit einem Krafteinbringungsmittel eingerichtet ist und eine Kraft darüber eingebracht wird, führt dies bevorzugt zu einer Veränderung der Position der Spindel relativ zum Gehäuse. Diese Veränderung der Position der Spindel relativ zum Gehäuse bedingt dann bevorzugt eine zum Gehäuse relative Positionsveränderung des ersten Kraftübertragungsmittels, die dann eine Positionsveränderung des zweiten Kraftübertragungsmittels relativ zum Gehäuse bewirkt. Die Größe der Positionsveränderungen des ersten und des zweiten Kraftübertragungsmittels stehen besonders bevorzugt in einem von dem Kraftübersetzungsmittel vordefinierten oder einstellbaren Verhältnis zueinander. Dieser Aufbau einer beispielhaften Kraftübertragungseinrichtung ermöglicht eine besonders gute Kompaktheit bei gleichzeitiger Aufbringung von ausreichend großen und sehr genau einstellbaren Prüfkräften. Die Handhabung ist wenig komplex, da relativ kleine Eingangskräfte aufgebracht werden müssen.

Ferner wird hier beschrieben ein Tragrahmen, insbesondere bevorzugt zum Aufstellen auf einer zu prüfenden Kraft- bzw. Drehmomentmesseinrichtung. Der Tragrahmen kann dazu eingerichtet sein, eine Lastvorrichtung nach zumindest einem der vorbeschriebenen Aspekte und Beispiele aufzunehmen. Zusammen bilden die im Tragrahmen montierte Lastvorrichtung und der Tragrahmen ein Prüfsystem bzw. ein Teil eines Prüfsystems.

Der Tragrahmen kann insbesondere eine Gehäuseaufnahme, die dazu eingerichtet sein kann, den Verbindungsabschnitt des Gehäuses der Lastvorrichtung aufzunehmen, umfassen sowie einen Kraftaufnahmeabschnitt, der dazu eingerichtet sein kann, die Ausgangskraft der Lastvorrichtung aufzunehmen. Ferner kann der Tragrahmen einen Lagerabschnitt aufweisen zur Verbindung einer Referenz-Kraft- bzw. Drehmomentmesseinrichtung mit dem Tragrahmen und zum Übertragen der Ausgangskraft auf die Referenz-Kraft- bzw. Drehmomentmesseinrichtung. Es ist bevorzugt vorgesehen, dass Gehäuseaufnahme, Kraftaufnahmeabschnitt und/oder Lagerabschnitt separate Bauteile sind, die mit dem Tragrahmen lösbar verbunden werden können. Alternativ können die drei vorgenannten Bauteile oder ein oder mehrere der vorgenannten Bauteile auch fest mit dem Tragrahmen verbunden sein. Lagerabschnitt und Gehäuseaufnahme können auch als ein einteiliges Bauteil ausgeführt sein oder separate Bauteile sein.

Wiederrum ist der Aufbau auch des Tragrahmens sehr kompakt ausführbar und umfasst eine reduzierte Anzahl einzelner Bauteile, so dass der Aufbau wenig komplex durch eine Person und mit wenig Werkzeug durchführbar ist. Alle Bauteile sind besonders bevorzugt per Steck- und/oder Schraubverbindungen schnell lösbar miteinander verbindbar.

Ferner können die Gehäuseaufnahme, der Kraftaufnahmeabschnitt und der Lagerabschnitt derart miteinander verbindbar sein, dass eine Kraftübertragung von der Lastvorrichtung auf den Kraftaufnahmeabschnitt des Tragrahmens eine Zugbelastung des Lagerabschnittes bzw. der Gehäuseaufnahme bzw. des Referenzkraftnehmers erzeugt. Eine derartige Verbindung der Bauteile ist mit relativ wenigen Verbindungspunkten ausführbar und führt zu einer hohen Genauigkeit bei der Einleitung der Prüfkraft. Alternativ kann die Verbindung jedoch auch so ausgeführt sein, dass eine Druckkraft übertragbar ist, falls dies erforderlich sein sollte.

Ferner kann der Tragrahmen eine Vielzahl Stützfußverbindungsabschnitte aufweisen, die dazu eingerichtet sein können, abnehmbare Stützfüße an unterschiedlichen Positionen des Tragrahmens aufzunehmen. Auch diese Verbindung kann bevorzugt mittels schnell ausführbarer Steck- und/oder Schraubverbindungen vornehmbar sein. Die unterschiedlichen Positionen der Stützfußverbindungsabschnitte erhöht die Flexibilität des Tragrahmens, diesen auf unterschiedliche zu prüfende Einrichtungen anzupassen. Eine wenig aufwendige und flexible Anpassung auf eine Vielzahl von Prüfständen ist damit ermöglicht.

Ferner ist hier beschrieben ein Prüfsystem, das insbesondere eine Lastvorrichtung gemäß einem der vorbeschriebenen Beispiele bzw. Modifikationen und einen Tragrahmen gemäß zumindest einem der vorbeschriebenen Beispiele bzw. Modifikationen umfasst. Ferner kann das Prüfsystem auch eine Referenz-Kraft- bzw. Drehmomentmesseinrichtung aufweisen und bevorzugt auch einen Adapter zur Verbindung des Prüfsystems mit einer Zugmechanik, die dazu vorgesehen ist, an der zu prüfenden Kraft- bzw. Drehmomentmesseinrichtung angeschlossen zu werden. Der Aufbau des Prüfsystems ist wenig komplex und schnell und flexibel ausführbar. Die Prüfkraft kann sehr genau aufgebracht werden.

Besonders genau und sicher kann die Prüfkraft eingeleitet werden, wenn bevorzugt die Referenz-Kraft- bzw. Drehmomentmesseinrichtung an dem Lagerabschnitt unterhalb der Lastvorrichtung befestigt ist; und unterhalb der Referenz-Kraft- bzw. Drehmomentmesseinrichtung der Adapter befestigt ist, wobei besonders bevorzugt die Längsachse der Lastvorrichtung, die Referenz-Kraft- bzw. Drehmomentmesseinrichtung und der Adapter auf einer gemeinsamen Geraden angeordnet sein können. Noch bevorzugter ist die Gerade eine Vertikale.

Zusammenfassend ist die Lastvorrichtung kompakt und handlich und ermöglicht eine genaue Prüfkrafterzeugung. Ferner können die Lastvorrichtung und der Tragrahmen mit wenig Aufwand und zeiteffizient zu einem (Teil eines) Prüfsystems zusammengefügt werden, das insgesamt handlich und kompakt und flexibel an verschiedene Prüfstände für Kraftfahrzeuge anpassbar ist.

Die Zeichnungen zeigen exemplarisch und schematisch
Figur 1A zeigt eine Perspektive einer Lastvorrichtung,
Figur 1B zeigt eine Perspektive eines Prüfsystems,
Figur 2A zeigt eine Seitenansicht einer Lastvorrichtung,
Figur 2B zeigt eine Schnittansicht entlang A-A gemäß Fig. 1A,
Figur 3A zeigt eine erste Seitenansicht eines Prüfsystems,
Figur 3B zeigt eine weitere Seitenansicht eines Prüfsystems,
Figur 4 zeigt eine Schnittansicht entlang B-B gemäß Fig. 3A,
Figur 5 zeigt eine Seitenansicht eines Prüfsystems, das auf einer zu prüfenden Einrichtung montiert ist, und
Figur 6 zeigt eine Seitenansicht eines Prüfsystems, das auf einer anderen zu prüfenden Einrichtung montiert ist.

Im Folgenden werden verschiedene Beispiele der vorliegend beanspruchten Gegenstände detailliert unter Bezugnahme auf die Figuren beschrieben. Gleiche bzw. ähnliche Elemente in den Figuren werden hierbei mit gleichen Bezugszeichen bezeichnet. Die vorliegende Beschreibung ist jedoch nicht auf die beschriebenen Ausführungsmerkmale begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.

Ein beanspruchter Gegenstand betrifft eine Lastvorrichtung 1 zum Kalibrieren, Überprüfen und Justieren von Kraft- bzw. Drehmomentmesseinrichtungen 100, die insbesondere Kraftfahrzeugprüfstände, z.B. vorzugsweise Rollenprüfstände, umfassen. Das beanspruchte Prüfsystem 150 umfasst ferner insbesondere eine Referenz-Kraft- bzw. Drehmomentmesseinrichtung 80 (kurz: Referenzkraftaufnehmer).

Die Lastvorrichtung 1 erlaubt es, dass definierte Prüfkräfte in das Prüfsystem bzw. die zu prüfende Kraft- bzw. Drehmomentmesseinrichtungen 100 eingebracht werden können.

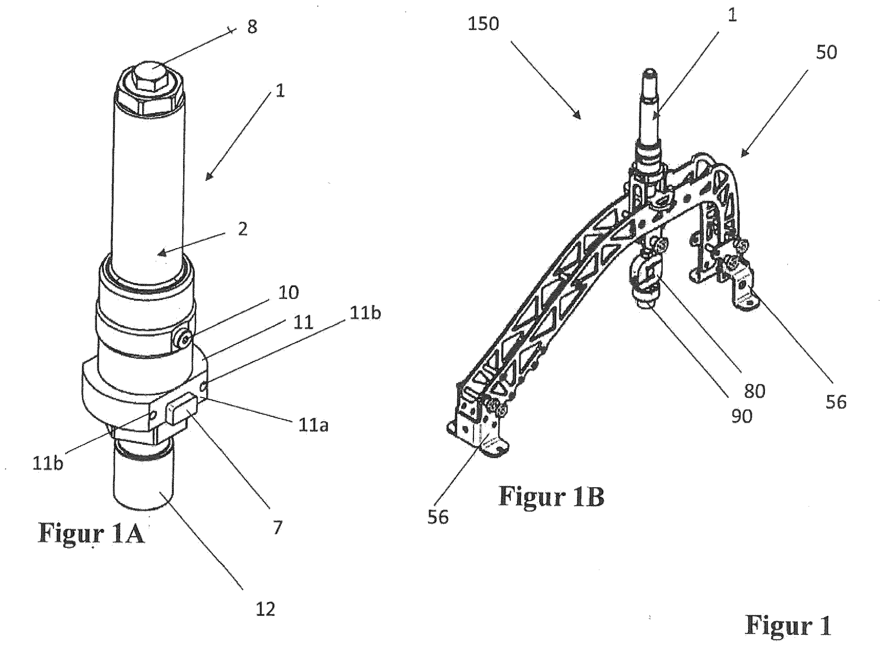

Die Figuren 1A und 1B zeigen die Lastvorrichtung 1 und ein beanspruchtes Prüfsystem 150 mit der Lastvorrichtung 1, einem Referenzkraftaufnehmer 80, einem Adapter 90 und einem Tragrahmen 50 in der Perspektive. Der Tragrahmen 50 weist Stützfüße 56 auf, die an verschiedenen Positionen des Tragrahmens 50 montierbar sind, um das Prüfsystem auf verschiedene Kraft- bzw. Drehmomentmesseinrichtungen, bevorzugt Prüfstandtypen, anpassen zu können.

Konkret zeigt die Figur 1A die Lastvorrichtung 1 in einer Außenperspektive. Dargestellt sind insbesondere ein Gehäuse 2 der Lastvorrichtung 1, ein Anschlussabschnitt 8, eine Entlüftungsschraube 10, ein Kragen 11 und eine Gewindehülse 12, wobei der Kragen 11 einen abgeflachten Kragenabschnitt 11a mit Kragenbohrungen 11b aufweist. Der Kragen 11 weist ferner an dem abgeflachten Kragenabschnitt 11a einen Verbindungsabschnitt 7 auf, der aus dem abgeflachten Kragenabschnitt 11a heraussteht. Die in der Perspektive der Figur 1A nicht sichtbare Seite der Lastvorrichtung 1 ist ähnlich wie die sichtbare Seite aufgebaut, was insbesondere bedeuten soll, dass dort ebenfalls ein abgeflachter Kragenabschnitt 11a mit Bohrungen 11b und Verbindungsabschnitt 7 vorgesehen ist. Der Verbindungsabschnitt 7 (bzw. die beiden) ist dazu eingerichtet, Kontakt mit Elementen des Tragrahmens 50 herzustellen, so dass die Lastvorrichtung 1 mit dem Tragrahmen 50 lösbar verbunden werden kann. Dies wird noch detaillierter in der nachfolgenden Beschreibung erläutert.

Ferner zeigt die Figur 1B die oben bereits benannte Verbindung zwischen dem Tragrahmen 50 und der Lastvorrichtung 1. Weiterhin sind mit dem Tragrahmen 50 ein Referenzkraftaufnehmer 80 und ein Adapter 90 verbunden. Das in der Figur 1B gezeigte Prüfsystem 150 kann mit einer zu prüfenden Kraft- bzw. Drehmomentmesseinrichtung 100, bevorzugt ein Kraftfahrzeugprüfstand, z.B. eine Bremsenprüfstand oder ein Leistungsprüfstand, via den Adapter 90 verbunden werden. Auch dies wird noch detaillierter erläutert werden.

In der Beschreibung der nachfolgenden Figuren werden nun vornhemlich Einzelheiten, Details und mögliche Alternativen bzw. Modifikationen der in den Figuren 1A und 1B gezeigten Bauteile erläutert.

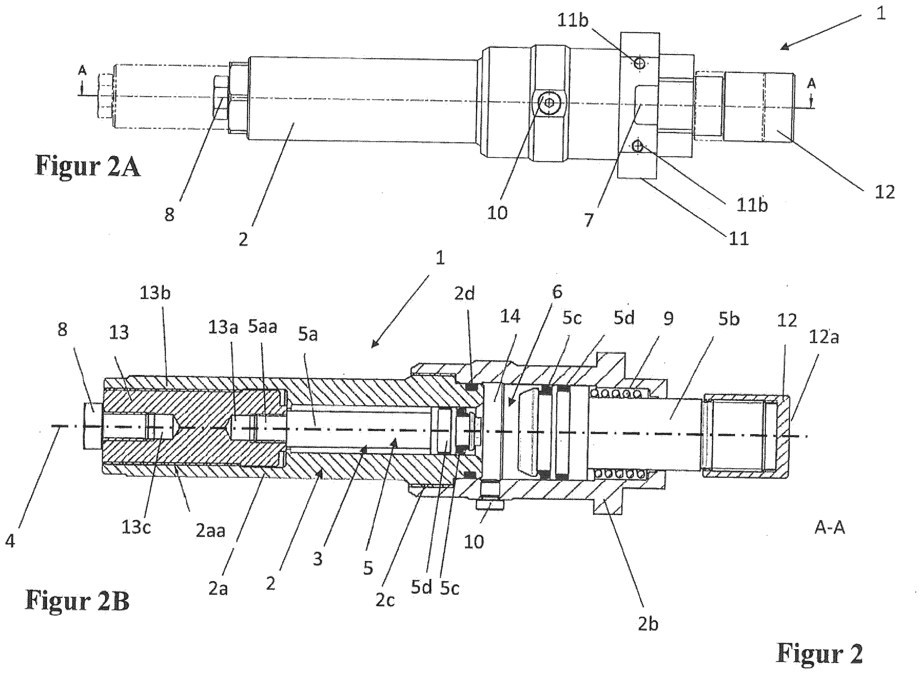

Die Figuren 2A und 2B zeigen Detaildarstellungen einer Lastvorrichtung 1 gemäß einem bevorzugten Beispiel. Figur 1 gibt eine Seitenansicht wider und die gestrichelten Abschnitte der Lastvorrichtung 1, die die Figur 2A enthält, verdeutlichen, dass Teile der im Zusammenhang mit Figur 2B näher erläuterten Elemente der Lastvorrichtung 1 aus dem Gehäuse 2 der Lastvorrichtung 1 je nach Betätigungszustand der Lastvorrichtung 1 weiter bzw. weniger weit aus dem Gehäuse 2 herausragen können. Insbesondere kann der Anschlussabschnitt 8 und/oder die Gewindehülse 12 weiter in das Gehäuse 2 hinein oder heraus bewegt werden. Diese Funktion wird deutlicher im Zusammenhang der nachfolgenden Beschreibung der Figur 2B.

Die Figur 2B zeigt einen Schnitt entlang der Punkte A-A in Figur 2A und eine bevorzugte Beispielkonfiguration der Lastvorrichtung 1. Die Längsachse 4 der Lastvorrichtung 1 ist gestrichelt dargestellt. Das Bezugszeichen 2 markiert das Gehäuse der Lastvorrichtung 1, wobei das Gehäuse 2 gemäß des hier vorgestellten Beispiels 2-teilig aufgebaut ist. Der erste Gehäuseteil 2a ist mit dem zweiten Gehäuseteil 2b über ein Gehäusegewinde 2c miteinander verbunden und eine Gehäusedichtung 2d ist zwischen dem ersten Gehäuseteil 2a, der koaxial innerhalb eines Abschnittes des zweiten Gehäuseteils 2b angeordnet ist, und dem zweiten Gehäuseteil 2b vorgesehen. Beide Gehäuseteile 2a, 2b sind rohrförming ausgeführt, wobei innerhalb des ersten und des zweiten Gehäuseteils 2a, 2b, d.h. (zumindest teilweise) innerhalb deren Hohlraums, eine Kraftübertragungseinrichtung 3 mit - in dem hier gezeigten Beispiel - mehreren Kraftübertragungsmitteln 5 angeordnet ist.

Beispielhaft sind vorliegend gemäß Figur 2B zwei Kraftübertragungsmittel 5 (5a, 5b, die nachfolgend auch als Kolben bezeichnet werden können) vorgesehen, die voneinander getrennt innerhalb des Gehäuses 2 angeordnet sind. Sollte nur ein Kraftübertragungsmittel 5 vorgesehen sein, so kann auch das später noch näher beschriebene Kraftübersetzungsmittel 6 entfallen und die Kraft, die an der Anschlussstelle 8 eingeleitet wird, wird annähernd 1:1 als Ausgangskraft übertragen. Der Vorteil, den das Vorsehen von mehreren Kraftübertragungsmitteln 5 und einem Kraftübersetzungsmittel 6 mit sich bringen, liegt insbesondere darin, dass mit geringer Kraft eine größere Kraft als Ausgangskraft übertragen werden kann. Dadurch wird die Lastvorrichtung sehr kompakt und handlich in der Handhabung.

Das erste Kraftübertragungsmittel 5a ist (zumindest teilweise) innerhalb des ersten Gehäuseteils 2a angeordnet und das zweite Kraftübertragungsmittel 5b ist (zumindest teilweise) innerhalb des zweiten Gehäuseteils 2b angeordnet. Das erste Kraftübertragungsmittel 5a ist bevorzugt ein erster Kolben mit einem Durchmesser, der kleiner ist als der eines weiteren Kolbens, (der Teil) des zweiten Kraftübertragungsmittels 5b ist.

Figur 2B zeigt, dass eine Kolbendichtung 5c und ein Kolbenführungsring 5d an einem dem zweiten Kolben zugewandten Ende vorgesehen ist und an dem anderen Ende des ersten Kolbens ein Gewindeabschnitt 5aa vorgesehen ist. Der Gewindeabschnitt 5aa des Kolbens greift in eine erste Gewindebohrung 13a (gezeigt ist ein Sackloch mit Innengewinde) einer Spindel 13 ein, die ebenfalls innerhalb des Gehäuses 2 als bevorzugter Teil der Kraftübertragungseinrichtung 3 dieses Beispiels der Figur 2 angeordnet ist. Konkret zeigt die Figur 2B, dass die Spindel 13 innerhalb eines Innengewindebereichs 2aa des Gehäuses 2 eingebracht ist und ein Außengewinde 13b aufweist. Das Außengewinde 13b ist bevorzugt ein Trapezgewinde.

Auf der dem ersten Kolben (Kraftübertragungsmittel 5a) gegenüberliegenden Seite der Spindel 13 zeigt die Figur 2B eine weitere zweite Gewindebohrung 13c innerhalb der Spindel 13, in die der Anschlussabschnitt 8 eingeschraubt ist. Der Anschlussabschnitt 8 ist bevorzugt eine Mehrkant-Schraube, deren Kopf aus der Spindel 13 herausragt. Somit kann an dem Kopf ein Werkzeug angesetzt werden, dass mittels einer Drehbewegung die Spindel weiter in das Gehäuse 2 hinein dreht oder heraus dreht. Aufgrund der Verbindung zwischen der Spindel 13 und dem vorbeschriebenen ersten Kolben 5a wird der Kolben 5a ebenfalls weiter in das Gehäuse 2 hinein bewegt oder aus dem Gehäuse 2 heraus bewegt. Vorbeschrieben wurde, dass der erste Kolben 5a mittels einer Spindel 13 innerhalb des Gehäuses 2 bewegt werden kann. Die Spindel 13 kann jedoch auch vollständig ersetzt werden und bspw. kann nur der erste Kolben 5a vorgesehen sein, der mittels einer Linearkraft innerhalb des Gehäuses 2 bewegt werden kann, statt mittels der Drehbewegung, die über den Kopf der Schraube an dem Anschlussabschnitt 8 eingebracht wird. Auch kann statt einer Schraube der erste Kolben 5a oder die Spindel 13 direkt einen Anschlussabschnitt 8 aufweisen oder es kann eine andere Verbindung als eine Schraubverbindung zwischen Spindel 13 und/oder Schraube und/oder erstem Kolben 5a vorgesehen sein.

Das in diesem Beispiel der Figur 2 gezeigte Kraftübersetzungsmittel 6 ist zwischen den beiden Kolben 5a, 5b angeordnet und im vorliegenden Beispiel der Figur 2B enthält dieses zumindest eine Hydraulikkammer 14. Ein Eindrehen/Ausdrehen der Spindel 13 in/aus dem Gehäuse 2 verursacht in dem Beispiel der Figur 2B, dass das erste Kraftübertragungsmittel 5a weiter in das Gehäuse 2 hinein/heraus bewegt wird und verursacht eine Veränderung des Drucks in der Hydraulikkammer 14. Der veränderte Druck wird auf das zweite Kraftübertragungsmittel (in der Figur Kolben 5b) weitergegeben, der mittels einer Kolbendichtung 5c und eines Führungsringes 5d (zumindest teilweise) innerhalb des zweiten Gehäuseteils 2b angeordnet ist. Der zweite Kolben 5b wird gegen den Druck der Hydraulikkammer 14 von einer Rückstellfeder 9, die sich am Gehäuse 2 (genauer einer Verjüngung des zweiten Gehäuseteils 2b an einer Öffnung des Gehäuses 2) abstützt, in Position entlang der Längsachse 4 gehalten. Die Entlüftungsschraube 10 ist mit der Hydraulikkammer 14 verbunden. Eine Vergrößerung des Druckers innerhalb der Hydraulikkammer 14 führt dazu, dass ein aus dem Gehäuse 2 herausragender Teilabschnitt des zweiten Kolbens 5b weiter aus dem Gehäuse 2 heraus gedrängt wird. Der aus dem Gehäuse 2 herausragende Teilabschnitt ist mittels einer Gewindeverbindung mit einer Gewindehülse 12 verbunden. Die Gewindehülse 12 weist insbesondere eine plane Abschlussfläche 12a auf, die dazu vorgesehen ist, plan auf einem Gegenstück des Tragrahmens 50 aufzuliegen, um die Ausgangskraft so verlustfrei wie möglich auf den Tragrahmen 50 zu übertragen.

In der Figur 2 wird das Gehäuse 2-teilig dargestellt. Dies verbessert bzw. vereinfacht die Montage und die Wartung der Lastvorrichtung 1. Es ist jedoch auch möglich, dass ein einteiliges vorgesehen wird. Auch ein Gehäuse 2 mit noch mehr als zwei Teilen kann zweckdienlich sein. Das Kraftübersetzungsmittel 6 ist hier als hydraulisches gezeigt. Hier ist beispielhaft eine Übersetzung von 1:4 realisiert. Die Übersetzung kann jedoch auch anders ausgestaltet sein. Ferner ist die Spindel 13 bevorzugt aus Messing ausgeführt und hat ferner bevorzugt ein Trapezgewinde, um Verschleiß zu reduzieren. Die Kraftübersetzungsmittel 6 kann zumindest zweierlei technische Möglichkeiten mit sich bringen, nämlich erstens die Veränderung der Eingangskraft, die an dem Anschlussabschnitt 8 eingebracht wird, zu einer Ausgangskraft, die bevorzugt von dem zweiten Kraftübertragungsmittel 5b übertragen bzw. ausgegeben wird, wobei die Ausgangskraft bevorzugt größer ist als die Eingangskraft, und zweitens einer Veränderung des Kraft- bzw. Hubweges der Kraftübertragungsmittel 5, wobei bevorzugt der Hubweg des ersten Kraftübertragungsmittels 5a und/oder der Spindel 13 größer ist als der dadurch verursachte Hubweg des zweiten Kraftübertragungsmittels 5b, das die Ausgangskraft ausgibt. Eine solche Situation ist gestrichelt in der Figur 2A dargestellt, die zeigt, dass ein Einschieben bzw. hier Eindrehen des Anschlussabschnittes 8 weiter in das Gehäuse 2 hinein dazu führt, dass das zweite Kraftübertragungsmittel 5b mit der Gewindehülse 12 aus dem Gehäuse 2 herausbewegt wird, jedoch weniger weit als der Anschlussabschnitt 8 in das Gehäuse hineinbewegt.

Eine alternative Kraftübersetzungsmöglichkeit kann auch vorgesehen werden. Beispielsweise kann eine mechanische und/oder elektrische Kraftübersetzung zusätzlich oder alternativ vorgesehen werden. Die Gewindehülse 12 verbessert die Kraftübertragung und definiert vorteilhaft sehr genau und feinjustierbar eine Länge, die der zweite Kolben 5b aus dem Gehäuse 2 heraussteht. Ferner kann aufgrund der Gewindeverbindung der Gewindehülse 12 mit dem Kolben 5b auch eine Veränderung der Länge des aus dem Gehäuse 2 herausragenden Teils des zweiten Kolbens 5b erzielt werden, ohne den Druck der Hydraulikkammer ändern zu müssen. Dies kann vorteilhaft einer Voreinstellung dienen, z.B. zur Feinjustierung beim Einbau der Lastvorrichtung 1 in den Tragrahmen 50. Die Gewindehülse 12 ist jedoch auch komplett ersetzbar, z.B. wenn das Gewicht weiter verringert werden soll.

Die Rückstellfeder 9 ist vorteilhaft, da sie einen Vordruck in der Hydraulikammer 14 aufbringt, um ein problemloses Rückstellen des zweiten Kolbens 5b zu ermöglichen. Dadurch wird auch die Entlüftung über die seitlich angebrachte Entlüftungsschraube 10 erleichtert. Möglicherweise vorhandenes Restgas oder Restflüssigkeit wird komprimiert und verringert so den Leerhub.

Die Lastvorrichtung 1 bringt insbesondere die Vorteile mit sich, dass die kompakte Bauform eine einfache Transportierbarkeit ermöglicht und darüber hinaus eine sehr genaue Kraft als Ausgangskraft ausgegeben werden kann. Der Anschluss für das Einbringen der Eingangskraft ermöglicht eine manuelle Bedienung mittels Schraubenschlüssel oder elektrischer Schraubenziehmaschine. Ein Anschluss an eine computergesteuerte Stellvorrichtung, z.B. mittels Stellmotor, ist auch möglich, so dass auch eine automatisierte, computergesteuerte Prüfung ermöglicht wird. Es können Regelsysteme verwendet werden, die automatisiert diskrete oder dynamische Kraftwerte erzeugen. Auch eine funk- oder kabelgebundene Anbindung an eine Prüfstandsteuerung oder eine Kalibrier- (bzw. Auswerte-)software ist möglich. Die Antriebschnittstelle bzw. der Anschlussabschnitt 8 ist bevorzugt aus einem verschleißfesten Material, z.B. ist hier ein Sechskant aus Stahl gezeigt, ausgeführt.

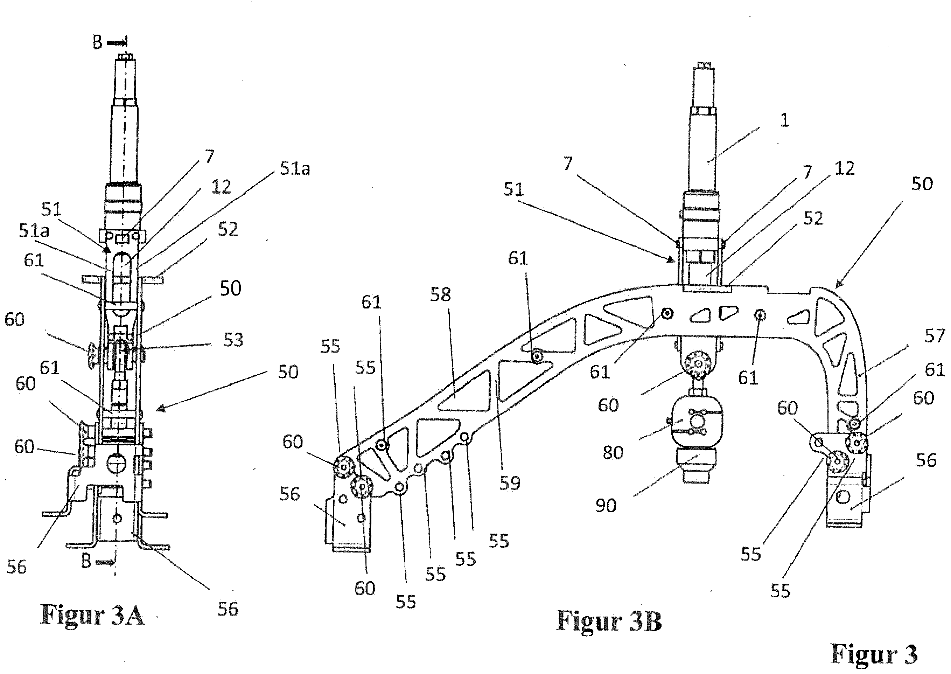

Die Figur 3 mit den Figuren 3A und 3B zeigt zwei Seitenansichten einer mit dem Tragrahmen 50 verbundenen Lastvorrichtung 1. Im oberen Bereich beider Figuren 3A und 3B ist dabei eine Gehäuseaufnahme 51 gezeigt, die die Verbindung mit der Lastvorrichtung 1 insbesondere herstellt. Dies wird noch weiter im Nachfolgenden erläutert werden.

Die Figur 3B zeigt in der Seitenansicht, dass der Hauptträger 57 des Tragrahmens 50 bevorzugt einstückig ausgeführt ist und besonders bevorzugt als Leichtbauteil mit fachwerkartiger Struktur ausgeführt, die Aussparungen 58 und Streben 59 umfasst. Mit anderen Worten ist das bzw. sind die Bauteile des Tragrahmens 50 gewichtsoptimiert und hochfest ausgeführt, vorzugsweise als Stahl-Laser-Teile. Besonders bevorzugt hat der Hauptträger 57 eine Seitenprojektionsfläche, die einer rechtwinkligen Trapezform ähnlich ist, wobei die Ecken abgerundet sind. Dies ist im Hinblick darauf, dass eine Zugbelastung nach unten ("unten" in der Ansicht der Figur 3B) im Wesentlichen auftritt und die Formgebung eine besonders hohe Positionsgenauigkeit und Verformungssicherheit mit sich bringt. Ferner kann der Hauptträger 57 auch zumindest zwei Blechzuschnitte umfassen, die beabstandet zueinander angeordnet und miteinander verbunden sind, wie die Figur 2A zeigt. Die Verbindung kann mittels Bolzen und/oder Schrauben erfolgen, die in der Figur 2 das Bezugszeichen 61 tragen.

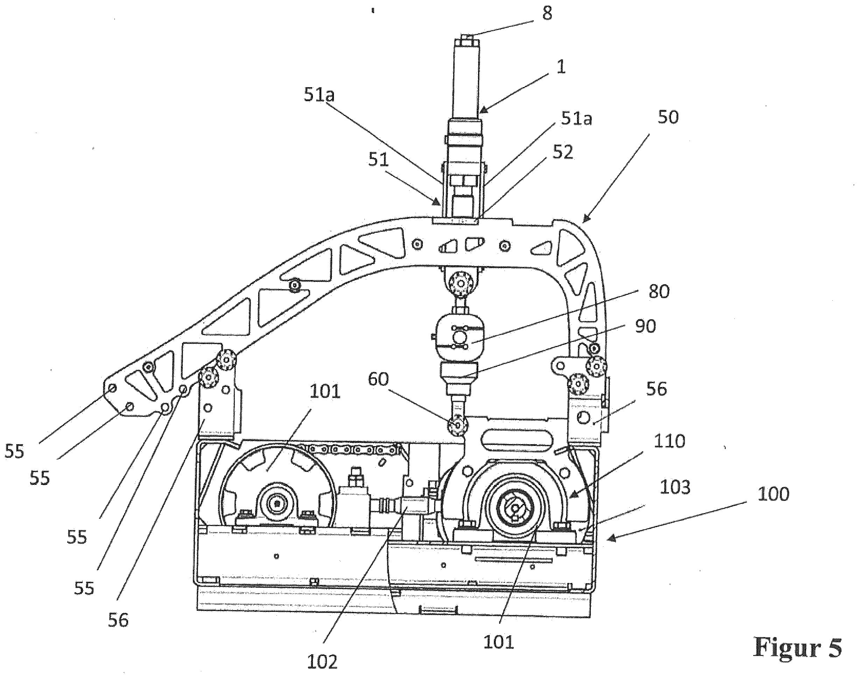

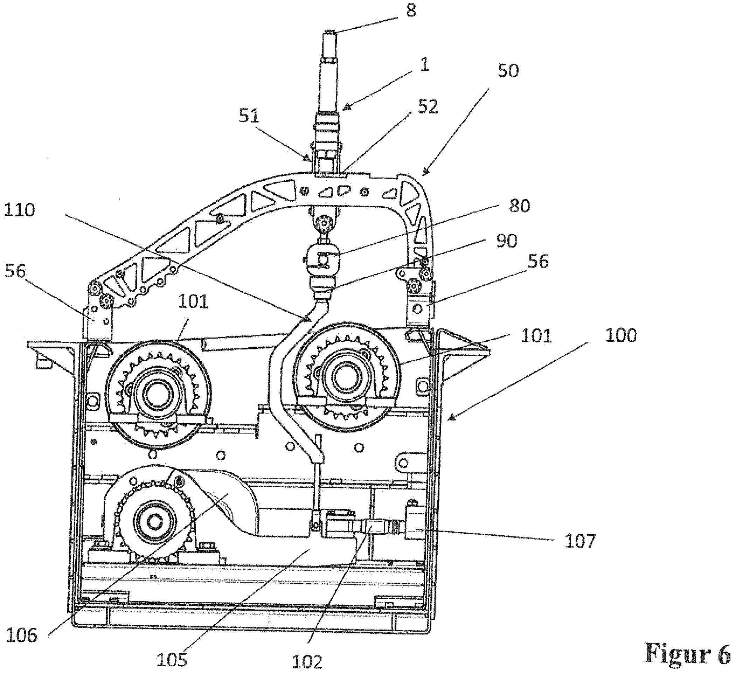

Ferner weist der Tragrahmen Stützfußverbindungsabschnitte 55 auf, die an unterschiedlichen Positionen des Tragrahmens 50 bevorzugt als Bohrungen bzw. Durchgangslöcher ausgeführt sind. Es können auch Innengewinde vorgesehen sein. Die Stützfußverbindungsabschnitte 55 ermöglichen, dass Stützfüße 56, die in der Figur 3 gezeigt sind, an variablen Positionen montiert werden können. Somit können die Stützfüße 56 bedarfsgerecht an verschiedenen Steckpositionen montiert werden. Die erforderlichen Steckpositionen sind besonders bevorzugt über ein intuitiv lesbares Markierungssystem, bspw. Aufkleber mit Farbkennzeichnung, kenntlich gemacht. Die Stützfüße können mittels Steckschrauben oder Steckbolzen mit Axialsicherung 60 mit dem Hauptträger 57 an den Stützfußverbindungsabschnitten 55 ohne größeren Aufwand lösbar montiert werden. Die Figuren 5 und 6 zeigen Beispiele für unterschiedliche Montagepositionen der Stützfüße 56.

Die Stützfüße können Bohrungen aufweisen, die auch in den zu kalibrierenden Prüfständen (bzw. deren Rahmen) wieder zu finden sind, um prozesssicher immer die gleiche Aufstellposition zu erhalten.

Der Tragrahmen 50 weist ferner einen Kraftaufnahmeabschnitt bzw. eine Traverse 52 auf, die bevorzugt eine ebene horizontal ausgerichtete Platte ist, die am oberen Abschnitt des Tragrahmens 50 montiert ist. Besonders bevorzugt ist die Traverse 52 auf den Tragrahmen 50 formschlüssig aufsteckbar. Sie kann aber auch fest mit dem Tragrahmen 50 verbunden sein. Die Figur 3B zeigt die bevorzugte Position zwischen den beiden abgerundeten Ecken im (mittigen) Bereich des horizontalen Abschnittes des Tragrahmens 50. Im montierten Zustand kommt der Bereich, der die Ausgangskraft überträgt, bevorzugt die Abschlussfläche 12a der Gewindehülse 12, auf der Traverse 52 eben und spielfrei in Kontakt. Der Kontakt kann mittels eines Verdrehens der Gewindehülse 12 an dem zweiten Kolben 5b feinjustiert werden, was eine (fast) verlustfreie Kraftübertragung ermöglicht und gleichzeitig schnell und ohne größeren Aufwand durchgeführt werden kann. Der Kraftaufnahmeabschnitt bzw. die Traverse 52 leiten somit die Kraft der Lastvorrichtung 1 in den Tragrahmen 50 ein.

Die Krafteinleitung in den Tragrahmen 50 erfolgt somit über die Traverse 52, die bevorzugt die Kraft abstützt. Gleichzeitig werden Aufnahmearme 51a aufgrund der Krafteinleitung elastisch gelängt oder gekürzt. Die Aufnahmearme 51a sind Teil der Gehäuseaufnahme 51, die bevorzugt flache blechförmige Strukturen bzw. Bauteile umfasst, deren Teil die Aufnahmearme 51a sind. Beispielsweise sind die Aufnahmearme 51a in dem Beispiel der Figur 3A dadurch gebildet, dass eine größere Aussparung mittig aus einem blechförmigen Bauteil der Gehäuseaufnahme 51 entnommen wurde. An einem oberen Abschnitt der Gehäuseaufnahme 51 befinden sich zudem weitere Aussparungen, die mit dem Verbindungsabschnitt 7 und den Kragenbohrungen 11b übereinstimmen. Bei dem Zusammenbau wird der Verbindungsabschnitt 7 durch die entsprechende Öffnung/Aussparung der Gehäuseaufnahme 51 gesteckt und es können sicherheitshalber Steckstifte oder Schrauben verwendet werden, die in die Kragenbohrungen 11b eingeführt werden, um die Gehäuseaufnahme 51 bzw. ein Teilelement davon mit einer Seite der Lastvorrichtung 1 lösbar zu verbinden (s. Figur 2). Dies erfolgt auf beiden Seiten der Lastvorrichtung 1. An einem entgegengesetzten Abschnitt der Gehäuseaufnahme 51 (ein unterer Bereich dessen in Figur 2) ist die Gehäuseaufnahme 51 mit dem Lagerabschnitt 53 verbunden.

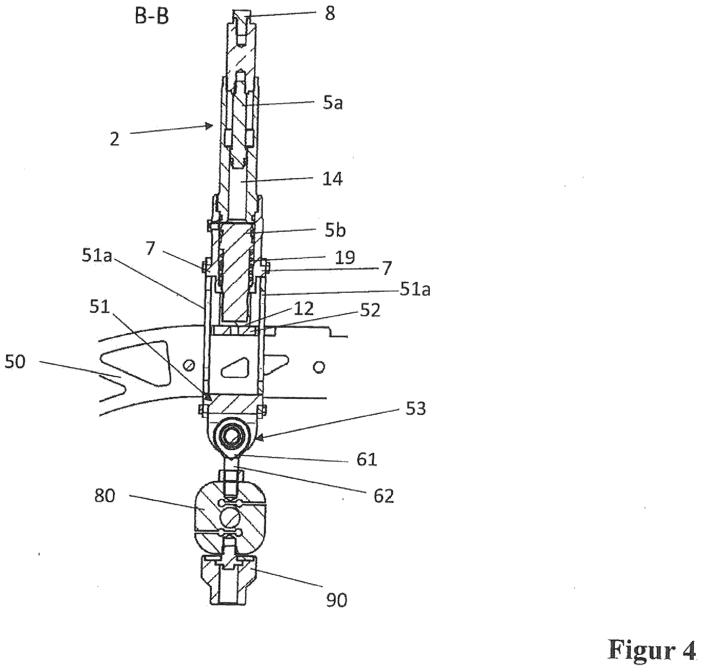

Hierzu wird auch auf die Figur 4 hingewiesen, die einen Schnitt entlang B-B der Figur 3B zeigt. Dieser Schnitt der Figur 4 zeigt die Gehäuseaufnahme 51 mit den Aufnahmearmen 51a, die das Gehäuse 2 der Lastvorrichtung 1 an zwei Seiten halten, nämlich an den abgeflachten Kragenabschnitten 11a und dem daraus jeweils hervorstehenden Verbindungsabschnitt 7. Die Aufnahmearme sind einstückig mit einem Abschnitt der Gehäuseaufnahme 51 verbunden, der unterhalb des gezeigten Trägerarmabschnittes des Tragrahmens 50, den die Figur 4 ausschnittweise zeigt. Auf diesen Abschnitt der Gehäuseaufnahme 51 zeigt der Pfeil mit dem Bezugszeichen 51 in der Figur 4 und dieser Abschnitt ist wiederrum, z.B. mittels Steckstiften, Schrauben und/oder formschlüssiger Verbindung mit dem Lagerabschnitt 53 verbunden, an dem ein Gelenkauge 61 angeordnet ist, das den Stift 62 zu dem Referenzkraft- und Drehmomentnehmer 80 drehbar gelagert hält.

Ein Ausfahren des zweiten Kolbens 5b bzw. ein Beaufschlagen der Traverse 60 mit Kraft führt aufgrund der oben beschriebenen und in Figur 2 gezeigten Verbindung zwischen Lastvorrichtung 1, Traverse 60 und Gehäuseaufnahme 51 zu einer elastischen Längung der Aufnahmearme 51a und somit zu einer Umwandlung und Übertragung der Ausgangskraft der Lastvorrichtung 1 in eine Zugkraft, die die Gehäuseaufnahme 51 bzw. die Aufnahmearme 51a auf den daran anmontierte Lagerabschnitt 53 übertragen. Alternativ können Spindel bzw. Lastvorrichtung 1, Traverse 60 und Gehäuseaufnahme 51 miteinander verschraubt werden, wenn eine Druckkraft statt einer Zugkraft übertragen werden soll.

Der Lagerabschnitt 53 weist bevorzugt, wie dies die Figur 3A und die Figur besonders deutlich zeigt, das Gelenkauge 61 mit Gleitlager auf und ein Steckbolzen bzw. eine Steckschraube 60 kann dazu herangezogen werden, wie dies die Figur 3 beispielhaft zeigt, die Referenz-Kraft- bzw. Drehmomentmesseinrichtung 80, z.B. ein Kraftsensor, an dem Lagerabschnitt 53 lösbar zu montieren. Die bevorzugte Ausführung des Lagerabschnittes 53 aufweisend ein Gelenkauge und ein Gleitlager ermöglicht vorteilhaft, dass Querkräfte vermieden werden können und der Kraftsensor 80 exakt in Zugrichtung ausgerichtet wird. Der in Figur 3 gezeigte beispielhafte Kraftsensor 80 ist wasserdicht ausgeführt (z.B. IP 57) und in Verbindung mit einer optionalen Anzeige rückführbar kalibrierbar. Die Anzeige kann aber muss nicht ortsfest mit dem Kraftsensor 80 verbunden sein (bspw. kann ein Handterminal mit Kabelanbindung vorgesehen sein; nicht gezeigt) verbunden, um eine bessere Ablesbarkeit zu gewährleisten.

Schließlich kann es vorteilhaft sein, einen Adapter 90 unterhalb der Referenz-Kraft- bzw. Drehmomentmesseinrichtung 80 zu montieren, um eine Zugmechanik 110 (weiter unten im Detail beschrieben) mit wenigen Handgriffen und ohne zusätzliches Werkzeug montieren zu können. Um verschiedene Adapter 90 schnell montieren zu können ist, ein bevorzugt ein drehbar gelagerter Gewindeadapter 90 vorgesehen. Über diesen kann auch eine Feineinstellung der Höhe in der vertikalen Richtung bzw. über der zu prüfenden Vorrichtung 100 vorgenommen werden.

Ferner kann die Traverse 60 Mittelmarkierungen aufweisen, die es leichter und insbesondere noch genauer erlauben, die Lastvorrichtung 1 mithilfe eines Lasers oder eines Senklotes exakt über einem definierten Krafteinleitungspunkt zu platzieren.

Der Kraftsensor 80 und/oder der Adapter 90 und/oder die Zugmechanik 110 können (zusätzlich) mit einer Vorrichtung zur genauen Ausrichtung, z.B. einer Libelle ausgerüstet sein. Oder über eine Halterung für die Anbringung eines externen Neigungsmessers verfügen.

Die Beschreibung oben hat aufgezeigt, dass der Aufbau bzw. die Montage mit einer Person ohne größeren Zeitaufwand realisiert werden kann. Bevorzugt sind alle Komponenten steckbar (z.B. Steckbolzen mit Axialsicherung) und/oder schraubar miteinander verbunden und so konzipiert, dass sie mit einer Hand gehalten werden können. Alle erforderlichen Teile können bevorzugt mit einer Korrosions- und/oder Verschleißschutzschicht überzogen sein, bspw. vernickelt und/oder verzinkt. Ebenso können alle Teile (inkl. vormontierter Baugruppen) in einem Transportkoffer (z.B. Trolley) untergebracht werden, da sie möglichst kompakt und handlich ausgelegt sind.

Schließlich zeigen die Figuren 5 und 6 zwei Beispiele, bei denen das Prüfsystem 150 mit einer zu prüfenden Kraft- bzw. Drehmomentmesseinrichtung 100 (hier in den Figuren sind als Beispiel zwei unterschiedliche Kraftfahrzeugrollenprüfstände gezeigt) verbunden ist, um die Messung der Kraft- bzw. Drehmomentmesseinrichtung 100 mittels der Referenzeinrichtung 80 zu prüfen, ggf. zu kalibrieren oder ggf. zu justieren. Die Figur 5 zeigt ein Beispiel, bei dem ein Rollenprüfstand, wie er beispielsweise für die Bremsen- oder Leistungsprüfung von Kraftfahrzeugen einsetzbar ist, geprüft werden soll.

Die Rollen 101 des Prüfstandes, der hier die zu prüfenden Kraft- bzw. Drehmomentmesseinrichtung 100 ist, nehmen zwischen den Rollen 101 das Rad eines Kraftfahrzeuges auf. Zumindest eine der Rollen ist beispielsweise motorisch antreibbar und ein Drehmomentenmessarm 102 erfasst Drehmomente, z.B. wenn ein Kraftfahrzeug gegen die Rolle 101 abgebremst wird. Um die Messung zu prüfen (oder zu kalibrieren oder justieren), wird eine definierte Prüfkraft mittels des Prüfsystems 150 ohne Kraftfahrzeug eingeleitet.

Dies kann, wie Figur 5 zeigt, dadurch realisiert sein, dass eine Zugmechanik 110, die hier beispielhaft ein jochförmiges Bauelement (auf das der Pfeil 110 zeigt) umfasst, dass mittels Steckbolzen bzw. -schraube 60 an das Prüfsystem 150 bzw. genauer den Adapter 90 lösbar angebunden ist. Das jochförmige Bauelement kann beispielsweise mittels Schrauben oder Steckbolzen mit dem Motorflansch der motorangetriebenen Rolle 101 verbunden sein. Ein Einbringen einer Kraft, z.B. in Form einer Drehung an dem Anschlussabschnitt 8, längt die Aufnahmearme 51a, wie oben beschrieben wurde, und bringt eine definierte Kraft auf den Referenzkraftmesser 80 auf, die auch angezeigt wird. Dieselbe Kraft wird aufgrund der Verbindung des Referenzkraftmesser 80 mit der Zugmechanik 110 (und dessen Anbindung an den Motorflansch, der nicht gezeigt ist, der Rolle 101) bis auf den Drehmomentenmesser 102 weitergeleitet. Stimmt die Anzeige des Prüfstandes bzw. der zu prüfenden Kraft- bzw. Drehmomentmesseinrichtung 100 mit dem Messwert des Referenzkraftmessers 80 überein, so ist das Prüfergebnis, dass der Prüfstand genau misst bzw. arbeitet.

Die Figur 6 zeigt ein ähnliches Beispiel, jedoch ist der Prüfstand, der hier die zu prüfenden Kraft- bzw. Drehmomentmesseinrichtung 100 ist, unterschiedlich aufgebaut ist und weist u.a. einen Messfederarm 105 auf und den Biegebalken/Momentenmessarm mit DMS 102 auf. Die Zugmechanik 110 umfassend einen gebogenen Zugarm bzw. Joch (der Pfeil 110 zeigt darauf) ist an den Messfederarm 105 angeschlossen. Der Getriebemotor 106 ist drehbar gelagert und stützt sich über den Messfederarm 105 und die Messfeder bzw. Biegebalken mit DMS 102 am Rahmen 107 ab. Die Prüfung an sich ist gleich zu der oben beschriebenen. Über die bekannten Hebelverhältnisse kann man die aufgebrachte Zugkraft in ein Drehmoment umrechnen. Innerhalb einer Baureihe sind die Hebelverhältnisse immer identisch.

Vorteilhaft ist ferner, dass bei PKW-Prüfständen lediglich der Mitteldeckel (z.B. mit vier Schrauben befestigt) entfernt werden muss. Bei LKW-Prüfständen kann das Prüfsystem 150 direkt (bei gedrückter Tastrolle) eingesetzt werden. Der Aufbauaufwand ist somit sehr gering und zeitlich schnell durchführbar.

Die Vorrichtung kann insbesondere für Bremsprüfstände und für Leistungsprüfstände eingesetzt werden. Neben der im Zusammenhang mit den Figuren 5 und 6 beschriebenen Krafteinleitung an vordefinierten Schnittstellen (z.B. Motorflansch oder Messfederarm 105) in den Prüfstand, kann zudem auch eine direkte Krafteinleitung an der Prüfstandrolle 101 erfolgen. Beispielsweise kann dazu ein Zugband mit dem Referenzkraftnehmer 80 verbunden werden und das Zugband (nicht gezeigt) kann auf der Prüfstandseite am Außenumfang der Rolle befestigt werden, um eine dort wirkende Kraft abzugreifen.

### Bezugszeichenliste

1 Lastvorrichtung
2 Gehäuse
2a, 2b erster, zweiter Gehäuseteil
2aa Innengewindebereich
2c Gehäusegewinde
3 Kraftübertragungseinrichtung
4 Längsachse des Gehäuses 2
5, 5a, 5b Kraftübertragungsmittel
5aa Gewindeabschnitt
5c Kolbendichtung
5d Kolbenführungsring
6 Kraftübersetzungsmittel
7 Verbindungsabschnitt
8 Anschlussabschnitt
9 Rückstellfeder
10 Entlüftungsschraube
11 Kragen
11a abgeflachter Kragenabschnitt
11b Kragenbohrungen
12 Gewindehülse
12a Abschlussfläche
13 Spindel
13a erstes Sackloch/Innengewinde
13b Außengewinde
13c zweites Sackloch/Innengewinde
14 Hydraulikkammer
50 Tragrahmen
51 Gehäuseaufnahme
51a Aufnahmearme
52 Kraftaufnahmeabschnitt
53 Lagerabschnitt
55 Stützfußverbindungsabschnitte
56 Stützfuß
57 Hauptträger
58 Aussparungen
59 Streben
60 Steckschrauben oder Steckbolzen
61 Gelenkauge
80 Referenz-Kraft- bzw. Drehmomentmesseinrichtung
90 Adapter
100 Kraft- bzw. Drehmomentmesseinrichtung
101 Prüfstandrolle
102 Momentenmessarm
104 Motorflansch
105 Messfederarm
106 Getriebemotor
107 Rahmen
110 Zugmechanik
150 Prüfsystem

## Patentansprüche

1. Prüfsystem (150) umfassend eine Lastvorrichtung (1), einen Tragrahmen (50) zum Aufstellen auf einer zu prüfenden Kraft- bzw. Drehmomentmesseinrichtung (100), eine Referenz-Kraft- bzw. Drehmomentmesseinrichtung (80) und einem Adapter (90) zur Verbindung des Prüfsystems (150) mit einer Zugmechanik (110), die dazu vorgesehen ist, an der zu prüfenden Kraft- bzw. Drehmomentmesseinrichtung (100) angeschlossen zu werden,
wobei die Lastvorrichtung (1) ein Gehäuse (2) und eine Kraftübertragungseinrichtung (3) aufweist, **gekennzeichnet dadurch , dass** die Kraftübertragungseinrichtung (3) zumindest ein erstes und
ein zweites Kraftübertragungsmittel (5a, 5b) umfasst, die in dem Gehäuse (2) bewegbar gelagert und entlang einer Längsachse (4) angeordnet sind, und das erste Kraftübertragungsmittel (5a, 5b) einen Endabschnitt zum Empfangen einer zu übertragenden Eingangskraft und das zweite Kraftübertragungsmittel (5b) einen Endabschnitt zum Ausgeben einer Ausgangskraft zum Prüfen der Kraft- bzw. Drehmomentmesseinrichtung (100) aufweist, wobei
der Endabschnitt des ersten Kraftübertragungsmittels (5a) einen Anschlussabschnitt (8) zum Verbinden des Endabschnittes mit einem Krafteinbringungsmittel aufweist, und der Endabschnitt des zweiten Kraftübertragungsmittels (5b) dazu vorgesehen ist plan auf einem Kraftaufnahmeabschnitt (52) des Tragrahmens (50) aufzuliegen,
ein Einbringen einer Kraft auf den Endabschnitt des ersten Kraftübertragungsmittels (5a) eine Veränderung der Position des ersten Kraftübertragungsmittels (5a) zum Gehäuse (2) bewirkt, die eine Positionsveränderung des zweiten Kraftübertragungsmittels relativ zum Gehäuse (2) bewirkt,
zumindest ein Kraftübersetzungsmittel (6) zwischen dem ersten und zweiten Kraftübertragungsmittel (5a, 5b) entlang der Längsachse (4) des Gehäuses (2) angeordnet ist, und
eine Rückstellfeder (9) in dem Gehäuse (2) angeordnet ist, die dazu eingerichtet ist, zumindest den Endabschnitt des zweiten Kraftübertragungsmittels (5b) gegen eine Wirkrichtung der Eingangskraft in Richtung der Längsachse (4) mit einer Rückstellkraft zu beaufschlagen; und
der Tragrahmen (50) dazu eingerichtet, die Lastvorrichtung (1) aufzunehmen, wobei der Tragrahmen (50) umfasst:
- eine Gehäuseaufnahme (51), die dazu eingerichtet ist, einen Verbindungsabschnitt (7) des Gehäuses (2) der Lastvorrichtung (1) aufzunehmen,
- den Kraftaufnahmeabschnitt (52), der dazu eingerichtet ist, die Ausgangskraft der Lastvorrichtung (1) aufzunehmen, und
- einen Lagerabschnitt (53) zur Verbindung der Referenz-Kraft- bzw. Drehmomentmesseinrichtung (80) mit dem Tragrahmen (50) und zum Übertragen der Ausgangskraft auf die Referenz-Kraft- bzw. Drehmomentmesseinrichtung (80) als Zugkraft.

2. Prüfsystem nach Patentanspruch 1, **gekennzeichnet dadurch, dass** zumindest ein Teil des Endabschnittes zum Ausgeben der Ausgangskraft aus dem Gehäuse (2) herausragt und eine Länge des herausragenden Teils des Endabschnittes durch ein Verändern der Eingangskraft, die auf den Endabschnitt zum Empfangen einer zu übertragenden Eingangskraft ausgeübt wird, veränderbar ist.

3. Prüfsystem nach zumindest einem der voranstehenden Patentansprüche, **gekennzeichnet dadurch, dass** das Kraftübersetzungsmittel (6) dazu eingerichtet ist, die Eingangskraft in einem vorbestimmten oder in einem einstellbaren Verhältnis zu der Ausgangskraft zu verändern.

4. Prüfsystem nach zumindest einem der voranstehenden Patentansprüche, **gekennzeichnet dadurch, dass** das Gehäuse (2) einen Verbindungsabschnitt (7) aufweist, der dazu eingerichtet ist, die Lastvorrichtung (1) mit einem Tragrahmen (50), der dazu eingerichtet, auf der zu prüfenden Kraft- bzw. Drehmomentmesseinrichtung (100) aufgestellt zu werden, zu verbinden.

5. Prüfsystem nach zumindest einem der voranstehenden Patentansprüche, **gekennzeichnet dadurch, dass** die Kraftübertragungseinrichtung (3) eine Spindel (13) umfasst und das erstes Kraftübertragungsmittel (5a) einen kleineren Durchmesser als das zweite Kraftübertragungsmittel (5b) aufweist, wobei
der Anschlussabschnitt (8) zum Verbinden mit einem Krafteinbringungsmittel eingerichtet ist und ein Einbringen einer Kraft an dem Anschlussabschnitt (8) zu einer Veränderung der Position der Spindel (13) relativ zum Gehäuse (2) führt, und
eine Veränderung der Position der Spindel (13) relativ zum Gehäuse (2) eine zum Gehäuse (2) relative Positionsveränderung des ersten Kraftübertragungsmittels (5a) bewirkt, die eine Positionsveränderung des zweiten Kraftübertragungsmittels (5b) relativ zum Gehäuse (2) bewirkt, und wobei die Größe der Positionsveränderungen des ersten und des zweiten Kraftübertragungsmittels in einem von dem Kraftübersetzungsmittel (6) vordefinierten Verhältnis zueinander stehen.

6. Prüfsystem nach Patentanspruch 1, wobei die Gehäuseaufnahme (51), der Kraftaufnahmeabschnitt (52) und der Lagerabschnitt (53) derart miteinander verbindbar sind, dass eine Kraftübertragung von der Lastvorrichtung (1) auf den Kraftaufnahmeabschnitt (52) des Tragrahmens (52) eine Zugbelastung des Lagerabschnittes (53) erzeugt.

7. Prüfsystem nach Patentanspruch 1 oder 6, **gekennzeichnet durch** eine Vielzahl Stützfußverbindungsabschnitte (55), die dazu eingerichtet sind, abnehmbare Stützfüße (56) an unterschiedlichen Positionen des Tragrahmens (50) aufzunehmen.

8. Prüfsystem gemäß Patentanspruch 1, **gekennzeichnet dadurch, dass** die Referenz-Kraft- bzw. Drehmomentmesseinrichtung (80) an dem Lagerabschnitt (53) unterhalb der Lastvorrichtung (1) befestigt ist und dass unterhalb der Referenz-Kraft- bzw. Drehmomentmesseinrichtung (80) der Adapter (90) befestigt ist, wobei die Längsachse (4) der Lastvorrichtung (1), die Referenz-Kraft- bzw. Drehmomentmesseinrichtung (80) und der Adapter (90) auf einer gemeinsamen Geraden angeordnet sind.

## Claims

1. A test system (150) comprising a load device (1), a support frame (50) for setting up on a power or torque measuring device (100) to be tested, a reference power or torque measuring device (80) and an adapter (90) for connecting said test system (150) to a tension mechanism (110) configured to be connected to said power or torque measuring device (100) to be tested,
wherein said load device (1) includes a housing (2) and a power transmission device (3), **characterized in that** said power transmission device (3) comprises at least first and second power transmission means (5a, 5b) which are movably mounted in said housing (2) and arranged along a longitudinal axis (4), and said first power transmission means (5a, 5b) includes an end portion for receiving an input power to be transmitted and said second power transmission means (5b) includes an end portion for outputting an output power for testing said power or torque measuring device (100), wherein
the end portion of said first power transmission means (5a) includes a link portion (8) for connecting the end portion to a power application means, and the end portion of said second power transmission means (5b) is configured to lie flat on a power receiving portion (52) of said support frame (50),
applicating a power to the end portion of said first power transmission means (5a) causes a change in the position of said first power transmission means (5a) to said housing (2), which causes a change in position of said second power transmission means relative to said housing (2),
at least one power transmission means (6) is arranged between the first and second power transmission means (5a, 5b) along said longitudinal axis (4) of said housing (2), and
a restoring spring (9) is arranged in said housing (2), said restoring spring (9) being configured to apply a restoring power to at least the end portion of said second power transmission means (5b) against an application direction of the input power in the direction of said longitudinal axis (4); and
said support frame (50) is configured to receive said load device (1), wherein said support frame (50) comprises:
- a housing receptacle (51) configured to receive a connection portion (7) of said housing (2) of said load device (1),
- said power receiving portion (52) configured to receive the output power of said load device (1), and
- a bearing portion (53) for connecting said reference power or torque measuring device (80) to said support frame (50) and for transmitting the output power to said reference power or torque measuring device (80) as a tensile power.

2. The test system according to claim 1, **characterized in that** at least a part of the end portion for outputting the output power protrudes from said housing (2) and that a length of the protruding part of the end portion can be changed by changing the input power applied to the end portion for receiving an input power to be transmitted.

3. The test system according to at least one of the preceding claims, **characterized in that** said power transmission means (6) is configured to change the input power in a predetermined or adjustable ratio to the output power.

4. The test system according to at least one of the preceding claims, **characterized in that** said housing (2) includes a connection portion (7) configured to connect said load device (1) to a support frame (50) configured to be set up on said power or torque measuring device (100) to be tested.

5. The test system according to at least one of the preceding claims, **characterized in that** said power transmission device (3) comprises a spindle (13) and said first power transmission means (5a) has a smaller diameter than said second power transmission means (5b), wherein
said link portion (8) is configured to connect to a power application means and an application of a power to said link portion (8) results in a change in the position of said spindle (13) relative to said housing (2), and
a change in the position of said spindle (13) relative to said housing (2) causes a change in position of said first power transmission means (5a) relative to said housing (2), which causes a change in position of said second power transmission means (5b) relative to said housing (2), and wherein a ratio between the magnitudes of the changes in position of the first and second power transmission means is predefined by said power transmission means (6).

6. The test system according to claim 1, wherein said housing receptacle (51), said power receiving portion (52) and said bearing portion (53) can be connected to one another in such a way that a power transmission from said load device (1) to said power receiving portion (52) of said support frame (52) generates a tensile load on said bearing portion (53).

7. The test system according to claim 1 or 6, **characterized by** a plurality of support foot connection portions (55) configured to receive removable support feet (56) at different positions of said support frame (50).

8. The test system according to claim 1, **characterized in that** said reference power or torque measuring device (80) is attached to said bearing portion (53) below said load device (1) and that said adapter (90) is attached below said reference power or torque measuring device (80), wherein said longitudinal axis (4) of said load device (1), said reference power or torque measuring device (80) and said adapter (90) are arranged on a common straight line.

## Revendications

1. Système de contrôle (150) comprenant un dispositif de charge (1), un cadre de support (50) destiné à être placé sur un dispositif de mesure de force ou de couple (100) à contrôler, un dispositif de mesure de force ou de couple de référence (80) et un adaptateur (90) pour relier le système de contrôle (150) à un mécanisme de traction (110) qui est prévu pour être raccordé au dispositif de mesure de force ou de couple (100) à contrôler, dans lequel
le dispositif de charge (1) comprend un boîtier (2) et un dispositif de transmission de force (3),
**caractérisé en ce que**
le dispositif de transmission de force (3) comprend au moins un premier et un deuxième moyen de transmission de force (5a, 5b) qui sont montés mobiles dans le boîtier (2) et disposés le long d'un axe longitudinal (4), et le premier moyen de transmission de force (5a, 5b) comprend une portion d'extrémité pour recevoir une force d'entrée à transmettre, et le deuxième moyen de transmission de force (5b) comprend une portion d'extrémité pour émettre une force de sortie pour contrôler le dispositif de mesure de force ou de couple (100),
la portion d'extrémité du premier moyen de transmission de force (5a) comprend une portion de raccordement (8) pour relier la portion d'extrémité à un moyen d'application de force, et la portion d'extrémité du deuxième moyen de transmission de force (5b) est prévue pour reposer à plat sur une portion de réception de force (52) du cadre de support (50),
l'application d'une force à la portion d'extrémité du premier moyen de transmission de force (5a) provoque une modification de la position du premier moyen de transmission de force (5a) par rapport au boîtier (2), ce qui provoque une modification de la position du deuxième moyen de transmission de force par rapport au boîtier (2),
au moins un moyen de multiplication de force (6) est disposé entre le premier et le deuxième moyen de transmission de force (5a, 5b) le long de l'axe longitudinal (4) du boîtier (2), et
un ressort de rappel (9) est disposé dans le boîtier (2), lequel est conçu pour solliciter au moins la portion d'extrémité du deuxième moyen de transmission de force (5b) par une force de rappel dans la direction de l'axe longitudinal (4) à l'encontre d'une direction d'action de la force d'entrée ; et le cadre de support (50) est conçu pour recevoir le dispositif de charge (1), le cadre de support (50) comprenant :
- un logement de boîtier (51) conçu pour recevoir une portion de liaison (7) du boîtier (2) du dispositif de charge (1),
- la portion de réception de force (52) conçue pour recevoir la force de sortie du dispositif de charge (1), et
- une portion de montage (53) pour relier le dispositif de mesure de force ou de couple de référence (80) au cadre de support (50) et pour transmettre la force de sortie au dispositif de mesure de force ou de couple de référence (80), à titre de force de traction.

2. Système de contrôle selon la revendication 1,
**caractérisé en ce qu'**au moins une partie de la portion d'extrémité pour émettre la force de sortie fait saillie hors du boîtier (2), et une longueur de la partie saillante de la portion d'extrémité peut être modifiée par une modification de la force d'entrée appliquée à la portion d'extrémité pour recevoir une force d'entrée à transmettre.

3. Système de contrôle selon l'une au moins des revendications précédentes,
**caractérisé en ce que** le moyen de multiplication de force (6) est conçu pour modifier la force d'entrée dans un rapport prédéterminé ou réglable par rapport à la force de sortie.

4. Système de contrôle selon l'une au moins des revendications précédentes,
**caractérisé en ce que** le boîtier (2) comprend une portion de liaison (7) conçue pour relier le dispositif de charge (1) à un cadre de support (50) conçu pour être placé sur le dispositif de mesure de force ou de couple (100) à contrôler.

5. Système de contrôle selon l'une au moins des revendications précédentes,
**caractérisé en ce que** le dispositif de transmission de force (3) comprend une broche (13), et le premier moyen de transmission de force (5a) présente un diamètre inférieur à celui du deuxième moyen de transmission de force (5b),
la portion de raccordement (8) est conçu pour être reliée à un moyen d'application de force, et l'application d'une force à la portion de raccordement (8) entraîne une modification de la position de la broche (13) par rapport au boîtier (2), et
une modification de la position de la broche (13) par rapport au boîtier (2) provoque une modification de la position du premier moyen de transmission de force (5a) par rapport au boîtier (2), ce qui provoque une modification de la position du deuxième moyen de transmission de force (5b) par rapport au boîtier (2), et
les amplitudes des modifications de la position des premier et deuxième moyens de transmission de force sont dans une relation mutuelle prédéfinie par le moyen de multiplication de force (6).

6. Système de contrôle selon la revendication 1,
dans lequel le logement de boîtier (51), la portion de réception de force (52) et la portion de montage (53) peuvent être reliés les uns aux autres de telle sorte qu'une transmission de force du dispositif de charge (1) à la portion de réception de force (52) du cadre de support (52) engendre une charge de traction sur la portion de montage (53).

7. Système de contrôle selon la revendication 1 ou 6,
**caractérisé par** une pluralité de portions de liaison de pied d'appui (55) conçues pour recevoir des pieds d'appui amovibles (56) à différentes positions du cadre de support (50).

8. Système de contrôle selon la revendication 1,
**caractérisé en ce que** le dispositif de mesure de force ou de couple de référence (80) est fixé à la portion de montage (53) en dessous du dispositif de charge (1), et
**en ce que** l'adaptateur (90) est fixé en dessous du dispositif de mesure de force ou de couple de référence (80), l'axe longitudinal (4) du dispositif de charge (1), le dispositif de mesure de force ou de couple de référence (80) et l'adaptateur (90) étant disposés sur une ligne droite commune.
